(19) Europäisches Patentamt
European Patent Office
Office européen des brevets

(11) **EP 1 485 685 B1**

(12) **FASCICULE DE BREVET EUROPEEN**

(45) Date de publication et mention de la délivrance du brevet:
**20.10.2010 Bulletin 2010/42**

(21) Numéro de dépôt: **02738244.9**

(22) Date de dépôt: **15.05.2002**

(51) Int Cl.:
**G01H 1/00** *(2006.01)*    **G01H 11/06** *(2006.01)*
**B64C 27/02** *(2006.01)*

(86) Numéro de dépôt international:
**PCT/FR2002/001630**

(87) Numéro de publication internationale:
**WO 2003/085366 (16.10.2003 Gazette 2003/42)**

(54) **PROCEDE ET DISPOSITIF POUR DETECTER DES DEFAUTS D'AU MOINS UN ROTOR D'UN AERONEF A VOILURE TOURNANTE**

VERFAHREN UND VORRICHTUNG ZUR FEHLERFESTSTELLUNG IN MINDESTENS EINEM ROTOR VON EINES FLUGOBJEKTES MIT DREHENDEM FLÜGEL

METHOD AND DEVICE FOR DETECTING DEFECTS OF AT LEAST ONE ROTARY WING AIRCRAFT ROTOR

(84) Etats contractants désignés:
**CH GB IT LI**

(30) Priorité: **18.03.2002 FR 0203312**

(43) Date de publication de la demande:
**15.12.2004 Bulletin 2004/51**

(73) Titulaire: **EUROCOPTER**
**13725 Marignane Cédex (FR)**

(72) Inventeur: **FERRER, Rogelio**
**F-13012 Marseille (FR)**

(74) Mandataire: **GPI & Associés**
**1330, rue Guillibert de la Lauzière**
**EuroParc de Pichaury, Bât B2**
**13856 Aix en Provence Cedex 3 (FR)**

(56) Documents cités:
**EP-A- 0 577 159     DE-A- 19 808 197**
**US-A- 4 937 758     US-A- 5 544 073**
**US-A- 5 901 272     US-A- 5 995 910**
**US-A- 6 098 022     US-B1- 6 199 018**
**US-B1- 6 301 572**

- **PATENT ABSTRACTS OF JAPAN vol. 1998, no. 07, 31 mars 1998 (1998-03-31) & JP 08 221137 A (COOPER TIRE &RUBBER CO), 30 août 1996 (1996-08-30)**
- **PATENT ABSTRACTS OF JAPAN vol. 1998, no. 07, 31 mars 1998 (1998-03-31) & JP 08 159928 A (POSUKON:KK), 21 juin 1996 (1996-06-21)**
- **PATENT ABSTRACTS OF JAPAN vol. 1995, no. 10, 30 novembre 1995 (1995-11-30) & JP 07 190849 A (TOSHIBA CORP), 28 juillet 1995 (1995-07-28)**

**EP 1 485 685 B1**

## Description

La présente invention concerne un procédé pour détecter des défauts éventuels d'au moins un rotor d'un aéronef à voilure tournante, en particulier d'un hélicoptère, et pour régler ce rotor. Elle concerne également un dispositif pour déterminer des défauts et des valeurs de réglage de paramètres de réglage d'un tel rotor.

Dans le cadre de la présente invention, on entend :

- par détection de défauts du rotor, la détection de pièces défectueuses (par exemple et de façon non exhaustive un roulement, un amortisseur de traînée, un bord d'attaque de pale décollé, une bielle de pas ou toute autre pièce mécanique présentant un défaut, générateur d'une augmentation du niveau vibratoire du rotor) dudit rotor, l'élimination de ces défauts correspondant au remplacement des pièces défectueuses ; et
- par réglage du rotor, le réglage d'éléments particuliers du rotor (par exemple des masses ou des volets compensateurs qui sont montés sur les pales du rotor) qui ont pour objet de réduire et minimiser les vibrations d'au moins une partie (par exemple le poste de pilotage) d'un aéronef en voilure tournante.

De telles vibrations constituent un problème important qu'il s'agit de combattre, car ces vibrations provoquent :

- des contraintes alternées dans tout l'aéronef entraînant des phénomènes de fatigue et ayant donc une influence directe sur la sécurité ;
- des vibrations dans le fuselage, ce qui peut réduire la précision et l'efficacité d'appareils, en particulier des armes, qui sont montés sur ledit fuselage ; et
- des vibrations dans la cabine, ce qui est bien entendu très gênant pour le confort des pilotes et des passagers.

Par le document EP-0 377 666 (US-4 937 758), on connaît un système et un procédé pour minimiser les vibrations ou les contraintes au sein d'un appareil, tel qu'un hélicoptère, comprenant un rotor auquel des pales tournantes sont fixées. Ledit procédé comporte des étapes consistant à (et ledit dispositif comprend des moyens pour) :

a) calculer les effets des ajustements mécaniques unitaires sur la force et le moment exercés par le rotor sur la structure du support. Chaque hélicoptère spécifique possède son propre fichier informatique, qui reste avec l'hélicoptère au cours de sa durée de vie. Ainsi, chaque hélicoptère avec numéro de série a sa propre base de données particulière (c'est-à-dire qui ne s'applique qu'à cet hélicoptère) contenant un profil vibratoire de l'hélicoptère au cours du temps, accompagné des informations descriptives relatives aux conditions de test en vol et aux actions de maintenance ;

b) déterminer au moins trois composantes de force et au moins trois composantes de moment générées par le rotor ;

c) détecter la position angulaire d'un arbre dudit rotor ;

d) traiter les signaux représentant les composantes de force et de moment et les signaux représentant la position angulaire dudit arbre, afin de produire les coefficients de Fourier desdits forces et moments ;

e) déterminer les ajustements mécaniques optimum du rotor destinés à minimiser les vibrations dans la structure du support du rotor, lesdits ajustements optimum étant déduits à partir desdits coefficients de Fourier de mouvements produits et à partir desdits effets calculés des ajustements mécaniques unitaires des pales ; et

f) indiquer des ajustements aux pales en accord avec lesdits ajustements mécaniques optimum.

Le procédé de minimisation de vibrations, décrit dans ce document EP-0 377 666, présente notamment les caractéristiques suivantes :

- il ne s'applique, à chaque fois, qu'à un seul hélicoptère, pour lequel il est nécessaire de calculer tout d'abord les effets des ajustements mécaniques sur la force et le moment exercés par le rotor ;
- il nécessite l'obtention de forces et de moments qui sont dus, d'une part au rotor non réglé et, d'autre part, à chacun des différents ajustements. Ces forces et moments peuvent être déduits de mesures réalisées par des moyens de mesure tels que des accéléromètres ou des jauges de force fixées à la structure, dont on mesure les déformations ;
- il réalise une approximation en assimilant le fuselage de l'hélicoptère à un corps rigide présentant six degrés de liberté (alors que l'hélicoptère est en réalité un corps déformable qui est soumis à des excitations extérieures provenant notamment des rotors et de différents efforts aérodynamiques) et il cherche à corriger les mouvements dans l'espace de ce corps rigide ;
- pour pouvoir être mis en oeuvre, il nécessite la connaissance de l'emplacement précis, dans la cabine de l'hélicoptère, desdits moyens de mesure (accéléromètres, jauges de force, ...) par rapport au centre de gravité de l'hélicoptère ; et
- pour calculer les ajustements mécaniques, il utilise un système linéaire usuel à coefficients d'influence.

Ce procédé (ou ce dispositif) connu présente plusieurs inconvénients importants :

A/ premièrement, en considérant l'hélicoptère comme un corps rigide et donc en essayant de minimiser les vibrations de sa structure sans tenir compte des déformations possibles de celle-ci, ledit procédé connu n'est pas en mesure de réaliser un réglage optimal du rotor ;

B/ deuxièmement, comme indiqué précédemment, on doit connaître de façon précise l'emplacement effectif des moyens de mesure par rapport au centre de gravité de l'hélicoptère.

Par conséquent, il ne doit pas y avoir d'erreur lors de l'agencement desdits moyens de mesure aux emplacements qui sont prévus à cet effet.

De plus, la position du centre de gravité de l'hélicoptère variant en fonction de son chargement, comme les emplacements des moyens de mesure sont prévus une fois pour toutes, toute variation ultérieure de la masse ou de la répartition de la masse dans l'hélicoptère entraîne forcément des erreurs dans la mise en oeuvre du procédé et réduit ainsi la précision du réglage réalisé ; et

C/ surtout, troisièmement, ce document connu prévoit de régler un rotor d'hélicoptère dans le but de réduire les vibrations, sans tenir compte de défauts éventuels de ce rotor, c'est-à-dire sans vérifier si des pièces telles que des roulements ou des amortisseurs dudit rotor sont défectueuses et si elles sont, au moins en partie, à l'origine des vibrations à réduire.

On sait que, avec des défauts de ce type, l'intensité des vibrations dues aux défauts varie, généralement, en fonction de la vitesse de rotation du rotor. Par conséquent, en réglant un rotor qui présente au moins un tel défaut, sans tenir compte de ce défaut, en mettant en oeuvre le procédé divulgué par le document EP-0 377 666, on arrive certes à réduire le plus souvent les vibrations pour la vitesse de rotation prise en compte lors de ce réglage, mais on ne minimise pas les vibrations pour toutes les vitesses de rotation. Au contraire, le réglage peut même avoir un effet opposé, c'est-à-dire entraîner une augmentation des vibrations, dans certaines conditions pour d'autres vitesses de rotation.

Par ailleurs, il peut arriver que les vibrations dues à un défaut du rotor soient si importantes qu'il devient impossible d'identifier la matrice d'influence permettant de mettre en oeuvre le procédé précité.

Par conséquent, lorsque des défauts existent sur le rotor, la solution préconisée par le document EP-0 377 666 n'est généralement pas applicable, car :

- il n'est en général pas possible de diminuer les niveaux vibratoires dans tout le domaine de vol pour garantir un confort satisfaisant ; et/ou
- il est souvent très difficile et parfois impossible d'identifier la matrice d'influence nécessaire à la mise en oeuvre dudit procédé.

La présente invention a pour objet de remédier à ces inconvénients. Elle concerne un procédé pour au moins détecter, de façon simple et efficace, des défauts éventuels d'au moins un rotor d'un aéronef à voilure tournante, de manière à pouvoir annuler ou tout au moins minimiser les vibrations (dues à de tels défauts) d'au moins une partie dudit aéronef.

A cet effet, selon l'invention, ledit procédé est remarquable en ce que :

I - dans une étape préliminaire, dans laquelle on utilise un aéronef de référence correspondant à un aéronef à voilure tournante dudit type particulier, dont le rotor est sans défaut et est réglé selon un réglage de référence, pour lequel le niveau vibratoire d'au moins une partie dudit aéronef est minimal :

a) on fait au moins une première série de mesures sur ledit aéronef de référence, en mesurant, lors d'un fonctionnement particulier dudit aéronef de référence, les valeurs d'au moins deux accélérations qui sont mesurées à des endroits quelconques de ladite partie de l'aéronef de référence et qui sont représentatives de vibrations engendrées au niveau de ladite partie de l'aéronef de référence :

α) d'une part, avec le rotor de l'aéronef de référence qui est sans défaut et qui est réglé selon ledit réglage de référence ; et
β) d'autre part, en introduisant des défauts dans ledit rotor ; et

b) à partir de cette première série de mesures d'accélérations et en considérant que l'aéronef est un corps déformable, on détermine un réseau de neurones qui illustre les relations entre lesdites accélérations et au moins lesdits défauts ; et

II - dans une étape ultérieure, pour au moins détecter les défauts éventuels du rotor d'un aéronef à voilure tournante particulier dudit type d'aéronef :

a) on fait une deuxième série de mesures sur ledit aéronef particulier, en mesurant les valeurs d'au moins certaines desdites accélérations au niveau de ladite partie de l'aéronef lors d'un fonctionnement particulier dudit aéronef ; et

b) à partir de cette deuxième série de mesures d'accélérations et du réseau de neurones déterminé à l'étape I/b), on détecte les défauts éventuels dudit rotor.

Ainsi, grâce à l'invention, on peut détecter de façon précise les défauts (c'est-à-dire les pièces défectueuses) du rotor. L'élimination de ces défauts (c'est-à-dire le remplacement des pièces défectueuses) permet alors de réduire, et éventuellement de minimiser voire même d'annuler, les vibrations de ladite partie (cabine, ...) de l'aéronef. Comme pièces du rotor susceptibles d'être défectueuses, on peut notamment citer les roulements du mât et les amortisseurs de traînée des pales.

En plus de détecter des défauts, le procédé conforme à la présente invention permet également de régler de façon simple et efficace ledit rotor, pour minimiser (voire annuler) toutes les vibrations de ladite partie de l'aéronef.

A cet effet, ledit procédé tel que précité est remarquable, selon l'invention, en ce que :

I - dans l'étape préliminaire :

a) on fait ladite première série de mesures sur ledit aéronef de référence, en mesurant, lors du fonctionnement particulier dudit aéronef de référence, les valeurs desdites accélérations qui sont représentatives de vibrations engendrées au niveau de ladite partie de l'aéronef de référence, en plus desdites situations α) et β), dans une situation γ) dans laquelle on fait varier les valeurs de réglage d'une pluralité de paramètres de réglage dudit rotor ; et

b) à partir de cette première série de mesures d'accélérations, on détermine ledit réseau de neurones qui illustre les relations entre, d'une part, lesdites accélérations et, d'autre part, lesdits défauts et lesdits paramètres de réglage ; et

II - dans l'étape ultérieure, qui est destinée de plus à régler le rotor de l'aéronef à voilure tournante particulier dudit type d'aéronef, après lesdites opérations a) et b) :

c) à partir de cette deuxième série de mesures d'accélérations et du réseau de neurones déterminé à l'étape I/b), on détermine les valeurs de réglage d'au moins certains desdits paramètres de réglage, qui permettent de minimiser le niveau vibratoire de ladite partie de l'aéronef ; et

d) on applique au rotor dudit aéronef les valeurs de réglage ainsi déterminées pour lesdits paramètres de réglage.

Ainsi, grâce à l'invention, on peut régler de façon précise les paramètres de réglage précisés ci-dessous du rotor de manière à réduire les vibrations au niveau d'au moins une partie de l'aéronef, en particulier dans la cabine, mais également sur la poutre de queue ou le fuselage par exemple.

De plus, grâce à l'invention, la mise en oeuvre du procédé nécessite un nombre réduit de fonctionnements d'essai, en particulier de vols d'essai, au moyen d'un aéronef de référence qui est sans défaut et qui est préréglé par des moyens connus et usuels et qui est du type particulier considéré, pour déterminer ledit réseau de neurones qui sera utilisé lors de réglages ultérieurs. Ce réseau de neurones peut être utilisé pour analyser le rotor de tout aéronef du même type que l'aéronef de référence.

Pour bien mettre en évidence les caractéristiques et les avantages du procédé conforme à la présente invention, on précise à présent les différences les plus importantes entre ce procédé et le procédé précité décrit dans le document EP-0 377 666 :

- le procédé conforme à l'invention permet, à la différence du procédé connu précité, de détecter les défauts éventuels du rotor avant de réaliser un réglage, ce qui permet d'obtenir un réglage optimal ;
- la présente invention considère que l'aéronef est un corps déformable et non pas un corps rigide à six degrés de liberté, ce qui, d'une part, permet de prendre en compte les déformations de la structure qui sont très importantes dans la réponse vibratoire de l'aéronef et, d'autre part, ne rend pas nécessaire l'utilisation de six moyens de mesure ;
- les mesures d'au moins deux accélérations sont suffisantes pour mettre en oeuvre la présente invention. De plus, il n'est pas nécessaire de connaître l'emplacement des accéléromètres qui réalisent ces mesures, alors que ledit procédé connu utilise six moyens de mesure, dont l'emplacement doit être connu avec précision par rapport au centre de gravité de l'hélicoptère, ce qui entraîne les inconvénients précités ;
- le procédé conforme à la présente invention traite directement les accélérations mesurées. En revanche, ledit procédé connu calcule tout d'abord, à partir des mesures réalisées par des accéléromètres ou des jauges de force, les forces et les moments exercés par le rotor, avant de traiter ensuite ces forces et ces moments ;

- le procédé conforme à l'invention utilise un réseau de neurones qui définit des relations non linéaires et qui est adaptable, comme précisé ci-dessous, alors que ledit procédé connu utilise simplement une matrice d'influence usuelle qui définit bien entendu uniquement des relations linéaires ; et

- ledit réseau de neurones qui est déterminé une fois pour toutes dans l'étape préliminaire I peut être utilisé ultérieurement pour détecter les défauts d'un rotor et régler le rotor de tout aéronef du même type que l'aéronef utilisé dans cette étape préliminaire I. En revanche, les matrices d'influence utilisées par ledit procédé connu doivent être déterminées préalablement pour chaque hélicoptère particulier, dont on veut régler le rotor, ce qui est notamment long et fastidieux.

Dans un mode de réalisation préféré, entre les étapes II/b) et II/c), on élimine les défauts qui ont été détectés le cas échéant à l'étape II/b) et on réalise une nouvelle deuxième série de mesures qui sera utilisée dans l'étape II/c) pour déterminer les paramètres de réglage, c'est-à-dire qu'on élimine les défauts (on remplace les pièces défectueuses) après les avoir déterminés, et avant de refaire des mesures pour déterminer ensuite les paramètres de réglage. Cette étape intermédiaire n'est pas toujours nécessaire. Toutefois, elle permet d'augmenter l'efficacité du réglage en réalisant ce dernier sur un aéronef avec un rotor sans défaut (c'est-à-dire sans pièce défectueuse).

En outre, avantageusement, des éléments de réglage définissant lesdits paramètres de réglage comportent au moins les élément suivants du rotor de l'aéronef :

- au moins une masse d'équilibrage préférentiellement au niveau du manchon de chacune des pales du rotor ;
- une bielle sur chacune des pales du rotor, à l'exception d'une pale qui représente une pale de référence ; et
- au moins un volet compensateur sur le bord de fuite de chacune des pales du rotor.

Par ailleurs, dans un premier mode de réalisation destiné à un rotor d'avance et de sustentation d'un aéronef à voilure tournante, on réalise, à ladite étape I/a), ladite première série de mesures au cours au moins des vols d'essai suivants :

- un vol de référence avec le rotor réglé selon ledit réglage de référence ;
- des vols avec des défauts volontairement introduits et connus du rotor ;
- un vol avec un premier déréglage particulier d'au moins une masse d'équilibrage d'une pale ;
- un vol avec un deuxième déréglage particulier d'au moins une bielle d'une pale, en ayant supprimé ledit premier déréglage ; et
- un vol avec un troisième déréglage particulier d'au moins un volet compensateur qui est prévu sur le bord de fuite d'une pale, en ayant supprimé ledit deuxième déréglage.

Dans ce cas, avantageusement, au moins l'un desdits vols d'essai réalisés à l'étape I/a) et desdits vols de mesure réalisés à l'étape II/a) comporte les configurations suivantes, au cours desquelles on réalise des mesures :

- une configuration de vol stationnaire ;
- une configuration de vol à environ 50 m/s, c'est-à-dire à environ 100 noeuds ;
- une configuration de vol à la puissance maximale continue ; et
- un essai au sol avec le rotor qui tourne.

De plus, pour un rotor d'avance et de sustentation d'un aéronef à voilure tournante, ladite partie de l'aéronef au niveau de laquelle on mesure les valeurs desdites accélérations est la cabine de l'aéronef. En revanche, pour un rotor de queue anticouple d'un aéronef à voilure tournante, ladite partie de l'aéronef au niveau de laquelle on mesure les valeurs desdites accélérations est la poutre de queue de l'aéronef.

Dans un second mode de réalisation, pour un rotor de queue d'un aéronef à voilure tournante, on réalise au moins l'une desdites première et deuxième séries de mesures, avec l'aéronef au sol et le rotor de queue en fonctionnement.

Par ailleurs, avantageusement, à l'étape I/b), on tient compte des hypothèses supplémentaires suivantes pour déterminer ledit réseau de neurones :

- le rotor est non isotrope ;
- les relations entre, d'une part, les défauts et les paramètres de réglage et, d'autre part, les valeurs des accélérations, sont linéaires ; et
- le niveau vibratoire existant en un point particulier de l'aéronef (qui est supposé déformable) correspond à la somme des vibrations élémentaires engendrées audit point particulier et provoquées par les défauts et le dérèglement desdits paramètres de réglage.

En outre, de préférence, on détermine à l'étape II/c) la valeur de réglage α d'un paramètre de réglage, en minimisant l'expression suivante :

$$\left| R(\alpha) + \gamma \right|^2$$

dans laquelle :

- R est la fonction de transfert correspondante dudit réseau de mesures ; et
- γ est un vecteur contenant le niveau vibratoire représentatif des mesures réalisées à l'étape II/a).

Par ailleurs, selon l'invention, à l'étape II/c), on peut de plus :

- visualiser les valeurs de réglage que l'on vient de déterminer, en particulier à partir d'un écran usuel ; et/ou
- enregistrer ces valeurs sur un support d'enregistrement usuel pour pouvoir les utiliser ultérieurement, notamment pour prédire les futurs niveaux ; et/ou
- afficher les valeurs des accélérations prédites par le réseau de neurones après les réglages.

On peut faire de même à l'étape II/b), pour les défauts du rotor.

Par ailleurs, on peut prévoir selon l'invention une phase de recalage, pour tenir compte des spécificités propres à un aéronef donné, pour laquelle :

a) on fait une troisième série de mesures, au cours de laquelle on fait varier uniquement les valeurs de réglage de certains desdits paramètres de réglage ; et

b) on ajuste ledit réseau de neurones à partir de ladite troisième série de mesures, pour les relations correspondantes qui sont relatives aux paramètres de réglage pour lesquels on a fait varier les valeurs de réglage.

La présente invention concerne également un dispositif pour détecter des défauts et déterminer des valeurs de réglage de paramètres de réglage d'un rotor d'un aéronef à voilure tournante.

Selon l'invention, ledit dispositif est remarquable en ce qu'il comporte :

- un calculateur qui est susceptible de déterminer automatiquement lesdits défauts et lesdites valeurs de réglage, de la manière indiquée précédemment, à partir d'un réseau de neurones et de valeurs de mesure d'une deuxième série de mesures ;
- un moyen d'interface entre ledit dispositif et un opérateur, qui permet à ce dernier d'entrer lesdites valeurs de mesure de ladite deuxième série de mesures dans ledit calculateur ; et
- un moyen d'indication pour indiquer audit opérateur les défauts et les valeurs de réglage déterminées par ledit calculateur.

De plus, avantageusement, ledit calculateur est susceptible de déterminer ledit réseau de neurones à partir de valeurs de mesure d'une première série de mesures, et ledit moyen d'interface permet de plus, audit opérateur, d'entrer dans ledit calculateur lesdites valeurs de mesure de ladite première série de mesures.

Par ailleurs, ledit dispositif peut comporter de plus une mémoire pour enregistrer ledit réseau de neurones.

Les figures du dessin annexé feront bien comprendre comment l'invention peut être réalisée. Sur ces figures, des références identiques désignent des éléments semblables.

La figure 1 montre schématiquement un aéronef à voilure tournante, auquel on applique la présente invention.

La figure 2 est le schéma synoptique d'un dispositif conforme à l'invention pour détecter les défauts (pièces défectueuses) et déterminer les valeurs de réglage (paramètres de réglage) d'au moins un rotor d'un aéronef à voilure tournante.

La figure 3 illustre schématiquement et partiellement une pale de rotor qui est munie d'éléments de réglage conformes à l'invention.

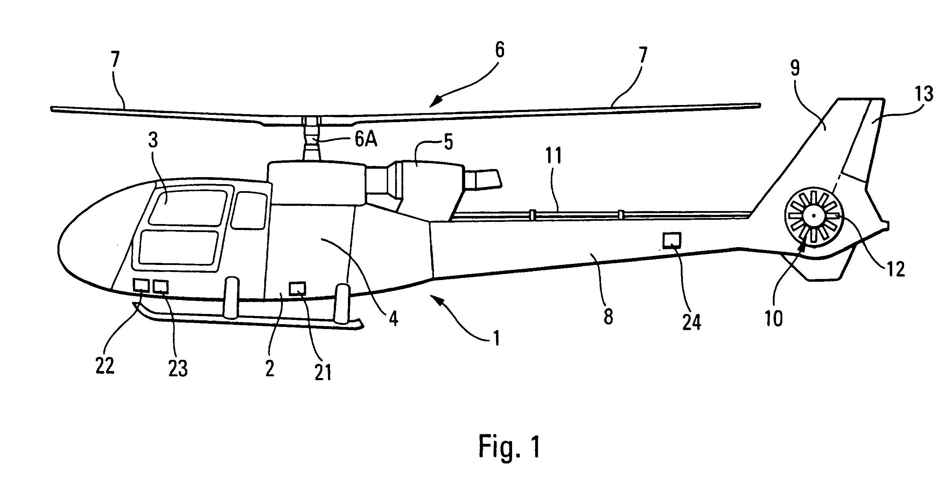

L'aéronef à voilure tournante, en l'occurrence un hélicoptère 1, représenté sur la figure 1, et auquel on applique la présente invention comporte de façon usuelle un fuselage 2, dans la partie avant duquel est disposée la cabine de pilotage 3. La partie intermédiaire 4 dudit fuselage comporte un groupe moteur 5 qui est susceptible d'entraîner en rotation un rotor principal d'avance et de sustentation 6, composé de pales 7. Le fuselage est prolongé vers l'arrière par une poutre de queue 8, à l'extrémité libre de laquelle est disposée une dérive 9 munie d'un volet 13. Par ailleurs, à l'extrémité arrière de la poutre de queue 8, par exemple à la base de la dérive 9, est prévu un rotor de queue anticouple 10 à pas variable, entraîné en rotation à partir du groupe moteur 5 par l'intermédiaire d'un arbre rotatif 11 et comportant des pales 12. De préférence, ledit rotor anticouple 10 est caréné, la carène étant constituée par la base de la dérive 9.

La présente invention concerne un procédé pour détecter des défauts d'au moins l'un des rotors 6 et 10 de l'hélicoptère 1 et pour régler ce rotor 6 et 10 dans le but d'obtenir un faible niveau vibratoire en 1 $\Omega$ notamment, $\Omega$ étant le régime du rotor 6, selon les trois directions de l'hélicoptère 1 (axial, latéral, et vertical) afin d'assurer un confort optimal et une sécurité de fonctionnement maximale. Ce réglage est effectué systématiquement après la fabrication et donc avant le premier vol de l'hélicoptère 1, ainsi qu'après toute opération de maintenance d'un rotor 6, 10. Il peut aussi s'effectuer à tout moment, si on le désire ou si le fonctionnement du rotor 6, 10 le nécessite.

Pour ce faire, le procédé conforme à l'invention présente au moins :

- une étape préliminaire ou "étape d'apprentissage" I ; et
- au moins une étape ultérieure II d'élimination des défauts, et éventuellement de réglage effectif.

Dans le cadre de la présente invention, un défaut du rotor 6, 10 correspond à un état défectueux (qui est notamment source de vibrations) d'une pièce dudit rotor, en particulier d'un amortisseur de traînée d'une pale 7 ou d'un roulement du mât 6A du rotor 6.

Selon l'invention, dans ladite étape préliminaire, dans laquelle on utilise (exclusivement) un hélicoptère de référence correspondant à un hélicoptère du type particulier (Ecureuil, Puma, ...) considéré pour le réglage, dont le rotor 6, 10 est sans défaut (aucune pièce défectueuse) et est réglé selon un réglage de référence, pour lequel le niveau vibratoire d'au moins une partie (cabine 3, poutre de queue 8, ...) dudit hélicoptère 1 est minimal :

a) on fait au moins une première série de mesures sur ledit hélicoptère de référence, en mesurant, lors d'un fonctionnement particulier dudit hélicoptère de référence 1, les valeurs d'au moins deux accélérations qui sont mesurées à des endroits quelconques de ladite partie 3, 8 de l'hélicoptère de référence et qui sont représentatives de vibrations engendrées au niveau de ladite partie de l'hélicoptère de référence :

$\alpha$) avec le rotor 6, 10 de l'hélicoptère de référence 1 qui est réglé selon ledit réglage de référence ;
$\beta$) en introduisant des défauts dans ledit rotor 6, 10 ; et
$\gamma$) en variant les valeurs de réglage d'une pluralité de paramètres de réglage dudit rotor ; et

b) à partir de cette première série de mesures d'accélération, et en considérant que l'hélicoptère 1 est un corps déformable (c'est-à-dire non rigide ou présentant une certaine souplesse), on détermine un réseau de neurones précisé ci-dessous, qui illustre les relations entre, d'une part, lesdites accélérations et, d'autre part, lesdits défauts et lesdits paramètres de réglage.

De plus, selon l'invention, dans une étape ultérieure II, pour détecter d'éventuels défauts et pour régler le rotor d'un hélicoptère 1 particulier quelconque dudit type (Ecureuil, Puma, ...) :

a) on fait une deuxième série de mesures sur ledit hélicoptère particulier 1, dont le rotor 6, 10 doit être réglé, en mesurant les valeurs d'au moins certaines desdites accélérations au niveau de la partie précitée (cabine, ...) de cet hélicoptère particulier 1, lors d'un fonctionnement particulier dudit hélicoptère particulier. On utilise, de préférence, parmi les accélérations mesurées lors de ladite première série de mesures, celles qui sont les plus sensibles ;
b) à partir de ladite deuxième série de mesures d'accélérations et du réseau de neurones déterminé à l'étape I/b), on détecte les défauts éventuels dudit rotor ;
c) à partir de cette deuxième série de mesures et du réseau de neurones déterminé à l'étape I/b), on détermine les valeurs de réglage d'au moins certains desdits paramètres de réglage, qui permettent de minimiser le niveau vibratoire de ladite partie de cet hélicoptère ; et
d) on applique au rotor 6, 10 dudit hélicoptère 1 les valeurs de réglage ainsi déterminées pour lesdits paramètres de réglage.

L'hélicoptère 1 représenté sur la figure 1 peut être un hélicoptère de référence ou un hélicoptère à régler. Pour des simplifications de la description, on se réfèrera à la figure 1 pour les deux cas.

On rappellera qu'un réseau de neurones est composé, de façon usuelle, d'un ensemble d'éléments opérant en parallèle et tels que, pour des entrées données, les sorties de l'ensemble soient caractérisées par le réseau. Ces éléments s'inspirent des systèmes nerveux biologiques. Comme dans le cas de neurones biologiques, les fonctions du réseau sont fortement déterminées par les liaisons entre éléments. Il est ainsi possible de faire "apprendre" un réseau de neurones de telle sorte qu'il puisse accomplir une fonctionnalité particulière en ajustant les valeurs des liaisons (qu'on appelle des poids) entre les éléments. Cet "apprentissage" est fait ou ajusté pour que, à une entrée donnée, le réseau délivre une sortie bien spécifique. En ce qui concerne les réseaux de neurones, on se référera par exemple à un article intitulé "Learning representation by back propagation errors" de D. Rumlhart, G. Hinton et R. Williams, qui est paru dans la publication "Nature", 1996, volume 323, pages 533 à 536.

Comme indiqué précédemment, l'apprentissage peut se faire en une seule fois pour un type donné d'hélicoptère, lors de ladite phase préliminaire d'apprentissage. Pour cela, on procède à une modification maîtrisée des défauts et des paramètres de réglage du rotor et on détermine la réponse de l'hélicoptère à cette modification. Les relations entre, d'une part, les défauts et les variations des paramètres de réglage au niveau du rotor et, d'autre part, les vibrations en différents points de l'hélicoptère, sont alors établies. Ces relations, traduites mathématiquement par le réseau de neurones, sont les relations de base pour un type donné d'hélicoptère (Ecureuil, ...). Elles sont utilisées ensuite, si besoin, pour minimiser les vibrations du fuselage (1 Ω, 2 Ω en autant de points que désirés, selon les trois axes, et ceci en un ou deux vols uniquement.

En faisant varier tour à tour chacun des paramètres de réglage précisés ci-dessous du rotor (ainsi que les défauts) et en enregistrant les différences de vibrations (accélérations) par rapport à la référence en plusieurs points judicieusement choisis de ladite partie de l'hélicoptère, en particulier de la cabine, on obtient donc le réseau R. Celui-ci donne, pour chaque configuration de fonctionnement et pour chaque harmonique (obtenue par transformée de Fourier), les relations entre chaque point de mesure, et chaque paramètre de réglage et chaque défaut.

Le réseau de neurones (spécifique d'un type d'hélicoptère 1) est de type "feed-forward" constitué de $N_{ce}$ cellules d'entrées ($N_{ce}=N_p$ paramètres de réglage x $N_b$ défauts x b pales), sans biais, possédant comme fonction d'activation la fonction identité. La couche de sortie est formée de $N_{cs}$ cellules ($N_{cs}=N_a$ accéléromètres x C configurations de vol x H harmoniques pour la partie réelle et la partie imaginaire de chaque point) ayant aussi comme fonction d'activation la fonction identité, et toujours sans biais.

Selon l'invention, chaque défaut qui doit être recherché par la suite est tout d'abord identifié. En prenant l'exemple d'un amortisseur de traînée des pales, on réalise donc les opérations suivantes :

- un amortisseur, présentant le défaut qu'il faudra détecter (s'il existe) sur les autres hélicoptères, est installé sur l'hélicoptère de référence ;
- au sol avec le rotor tournant, ou éventuellement en vol si l'état de l'amortisseur le permet, on enregistre les vibrations liées à ce défaut et on établit la signature du défaut en termes d'amplitude et de phase, que l'on différencie du signal type de référence sans défaut. Il constitue en quelque sorte l'algorithme d'apprentissage que l'on va faire apprendre au réseau de neurones. Ainsi, on disposera d'un réseau de neurones spécialisé qui saura reconnaître un tel défaut ; et
- en exploitation, la signature des défauts détectés sera reconnue par le réseau de neurones, selon des critères adaptés, parmi ceux d'une liste de défauts préétablis, et ceci en raison d'amplitudes ou de déphasages particuliers de signaux issus de détecteurs (accéléromètres, ...).

L'étape préliminaire d'apprentissage I utilise un algorithme usuel de minimisation par la méthode du gradient conjugué.

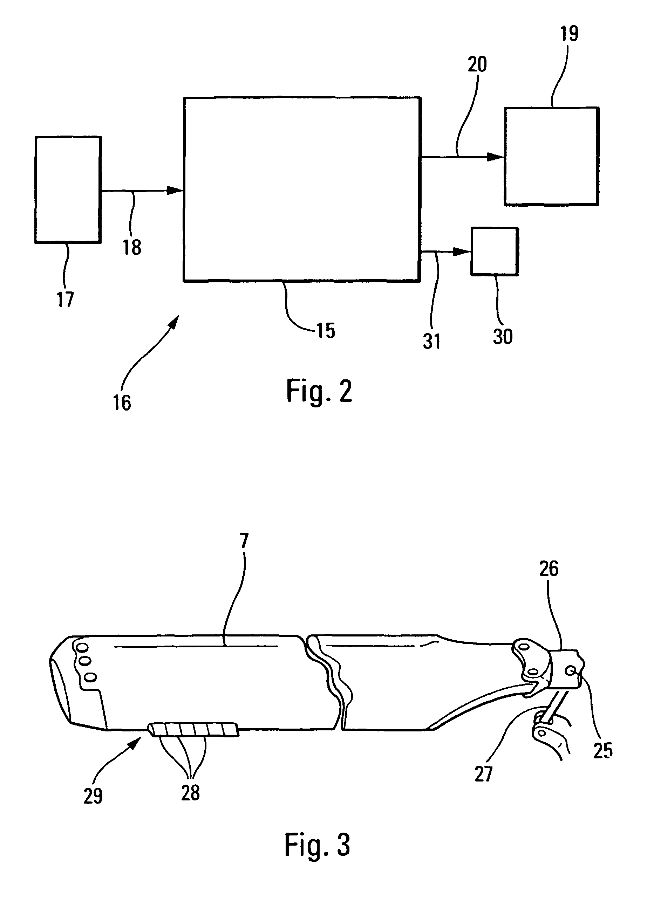

Ledit réseau de neurones est calculé automatiquement par un calculateur 15, par exemple un micro-ordinateur, qui fait partie d'un dispositif 16 conforme à l'invention, représenté schématiquement sur la figure 2 et comportant de plus :

- un moyen d'interface 17, par exemple un clavier, qui est relié par une liaison 18 au calculateur 15 et qui permet à un opérateur d'entrer des données dans ledit calculateur 15, et notamment les valeurs de mesure desdites premières et deuxièmes séries de mesures ; et
- un moyen d'indication 19, par exemple un écran de visualisation ou un moyen d'indication sonore, qui est relié par une liaison 20 au calculateur 15 et qui permet d'indiquer à l'opérateur les résultats des traitements réalisés par le calculateur 15, et en particulier les valeurs de réglage des paramètres de réglage.

Ainsi, grâce à l'invention, on peut détecter les défauts et régler de façon précise les paramètres de réglage précisés ci-dessous du rotor 6, 10 de manière à réduire les vibrations au niveau d'au moins une partie de l'hélicoptère 1, en particulier dans la cabine 3, mais également sur la poutre de queue 8 ou le fuselage 2 par exemple.

On notera que le calculateur 15 peut travailler dans le domaine fréquentiel en représentation de Fourier, mais également dans le domaine temporel.

Bien entendu, la présente invention peut être utilisée pour uniquement déterminer les défauts [étape ultérieure II précitée : uniquement opérations a) et b)] d'un rotor 6, 10, sans forcément réaliser le réglage de ce dernier [étape ultérieure II précitée : opérations c) et d) non réalisées].

Par ailleurs, dans un mode de réalisation préféré, entre les étapes II/b) et II/c), on élimine les défauts qui ont été détectés à l'étape II/b) et on réalise une nouvelle série de mesures qui sera utilisée dans l'étape II/c) pour déterminer les paramètres de réglage, c'est-à-dire qu'on élimine les défauts (on remplace les pièces défectueuses, par exemple un amortisseur de traînée d'une pale 7, qui présente une chute de raideur ou d'amortissement) après les avoir déterminés, et avant de refaire des mesures pour déterminer ensuite les paramètres de réglage. Cette étape intermédiaire n'est pas toujours nécessaire. Toutefois, elle permet d'augmenter l'efficacité du réglage en réalisant ce dernier sur un aéronef comportant un rotor (à régler) sans défaut.

De plus, grâce à l'invention, la mise en oeuvre du procédé nécessite un nombre réduit de fonctionnements d'essai, en particulier de vols d'essai, comme on le verra plus en détail ci-dessous, au moyen d'un hélicoptère de référence qui est préréglé par des moyens connus et usuels et qui est d'un type particulier, pour déterminer ledit réseau de neurones qui sera utilisé lors de réglages ultérieurs. Ce réseau de neurones peut être utilisé pour régler le rotor 6, 10 de tout hélicoptère 1 (y compris de l'hélicoptère qui avait été utilisé comme hélicoptère de référence) qui est du même type que l'hélicoptère de référence.

De façon avantageuse, en particulier pour régler le rotor principal 6, ladite pluralité d'accélérations, dont on mesure les valeurs à l'aide d'accéléromètres usuels (dont on a représenté schématiquement certains 21, 22, 23 et 24 sur la figure 1), peuvent comporter, à titre d'exemple non limitatif, au moins certaines des accélérations suivantes de la cabine de pilotage 3 de l'hélicoptère :

- les accélérations longitudinale, latérale et verticale au niveau du plancher de la cabine 3, sensiblement à l'aplomb du mât 6A du rotor principal 6 d'avance et de sustentation dudit hélicoptère 1, l'une desdites accélérations étant susceptible d'être mesurée par l'accéléromètre 21 ;
- l'accélération verticale au poste du pilote ; et
- les accélérations latérale et verticale au poste du copilote, mesurées par les accéléromètres 22 et 23.

On rappellera que, dans le cadre de la présente invention, il n'est pas nécessaire que les accéléromètres soient agencés à des emplacements particuliers connus avec précision. Toutefois, il peut être intéressant d'agencer au moins certains de ces accéléromètres au niveau de ventres de vibration du plancher de l'hélicoptère 1.

En outre, pour régler le rotor de queue 10, on mesure notamment des accélérations de la poutre de queue 8 portant ce rotor 10, par exemple à l'aide de l'accéléromètre 24.

Selon l'invention, pour régler le rotor 6, les éléments de réglage qui définissent lesdits paramètres de réglage comportent au moins les éléments usuels suivants (associés à chacune des pales 7 du rotor 6 de l'hélicoptère 1) :

- des masses d'équilibrage 25 qui sont prévues de préférence au niveau du manchon 26 de chacune des pales 7 du rotor 6 et qui permettent de minimiser le balourd du rotor, en déplaçant le centre de gravité selon l'envergure de l'ensemble pale/manchon/partie de moyeu correspondante ;
- une bielle 27 qui peut être allongée ou raccourcie sur chacune des pales 7 du rotor 6, à l'exception d'une pale qui représente une pale de référence. On sait qu'en allongeant la bielle 27, on augmente le pas de la pale et donc la portance, et qu'en raccourcissant la bielle 27, on réduit la portance ; et
- des volets compensateurs 28 (connus sous la dénomination "tab" dans le domaine aéronautique) qui sont prévus sur le bord de fuite 29 de chacune des pales 7 du rotor 6 et qui permettent de compenser des écarts de portance entre les pales 7.

Par ailleurs, selon l'invention, à l'étape I/b), on tient compte des hypothèses supplémentaires suivantes pour déterminer ledit réseau de neurones :

- le rotor 6, 10 est considéré comme non isotrope ;
- l'hélicoptère 1 est supposé être un corps déformable, pour les deux premiers harmoniques de la fréquence de rotation du rotor 6, 10 ;
- les relations entre, d'une part, les défauts et les paramètres de réglage et, d'autre part, les valeurs des accélérations, sont non linéaires ; et
- le niveau vibratoire existant en un point particulier de l'hélicoptère 1 est supposé correspondre à la somme des vibrations élémentaires engendrées audit point particulier et provoquées par les défauts et le dérèglement desdits paramètres de réglage.

Par ailleurs, dans un premier mode de réalisation destiné à régler le rotor 6 d'avance et de sustentation de l'hélicoptère 1, on réalise, à ladite étape I/a), ladite première série de mesures au cours au moins des vols d'essai suivants :

- un vol de référence avec le rotor 6 réglé selon ledit réglage de référence (qui permet une minimisation du niveau vibratoire) ;

- des vols avec des défauts choisis du rotor 6 ;
- un vol avec un déréglage particulier d'au moins une masse d'équilibrage 25 qui est prévue, de préférence, au niveau du manchon 26 d'une pale 7 ;
- un vol avec un déréglage particulier d'au moins une bielle 27 d'une pale 7 ; et
- un vol avec un déréglage particulier d'au moins un volet compensateur 28 qui est prévu sur le bord de fuite 29 d'une pale 7.

Dans ce cas, avantageusement, au moins l'un desdits vols d'essai réalisés à l'étape I/a) et desdits vols de mesure réalisés à l'étape II/a) comporte les configurations suivantes, au cours desquelles on réalise des mesures :

- une configuration de vol stationnaire ;
- une configuration de vol à environ 50 m/s, c'est-à-dire à environ 100 noeuds :
- une configuration de vol à la puissance maximale continue ; et
- un essai au sol avec le rotor qui tourne.

On notera que pour le vol avec des défauts, le nombre de configurations peut être réduit.

Dans ce cas (réglage du rotor 6), de plus, la mise en oeuvre de l'étape II/b) précitée du procédé conforme à l'invention comprend les opérations suivantes :

A1/ Traitement des fichiers

La position de référence du rotor étant différente sur chaque hélicoptère 1, il est nécessaire de recaler les mesures afin de conserver une origine identique. Soit $\alpha$ l'angle (pris positif dans le sens de rotation) entre la position de référence du rotor et la pale de référence, alors :

$$\varphi'_{c,a,h} = \varphi_{c,a,h} - h\alpha$$

où $\varphi'$ et $\varphi$ sont respectivement la phase du niveau vibratoire avant et après recalage, $\underline{c}$ représente l'une d'une pluralité (par exemple quatre) de configurations de vol, $\underline{a}$ représente l'un d'une pluralité (par exemple sept) d'accéléromètres et $\underline{h}$ représente l'un d'une pluralité (par exemple trois) d'harmoniques. Les phases seront transformées (de degrés) en radians. Les données sont ensuite transformées d'une écriture trigonométrique en une écriture complexe (parties réelle et imaginaire).

B1 / Identification des défauts éventuels du rotor 6.

C1 / Calcul des valeurs de réglage

L'hélicoptère 1 possède un réseau de neurones R, caractérisé par ses poids de connexion. Soit $\gamma$ le vecteur des vibrations mesurées sur l'hélicoptère 1 possédant un mauvais réglage du rotor 6, alors le vecteur $\alpha$ correspondant aux paramètres optimaux minimise la relation suivante :

$$F(\alpha) = \left\| R(\alpha) + \gamma \right\|^2$$

Il est nécessaire de calculer le gradient B de la fonction F par rapport à $\alpha$:

$$B = \frac{\partial F}{\partial \alpha} = \frac{\partial \left\| R(\alpha) + \gamma \right\|^2}{\partial \alpha}$$

On pose $\alpha_i$, la valeur de $\alpha$ à une itération i.

Pour une itération i, la mise à jour du vecteur des paramètres de réglage s'écrit :

$$\alpha i = \alpha(i - 1) + N.Bi,$$

avec N le pas de descente.

Les itérations sont répétées tant que la fonction F est supérieure à un certain seuil (seuil à déterminer lors de la conception).

D1 / Pondération

Afin de réaliser un réglage optimal par rapport à l'utilisation et au comportement de l'hélicoptère 1, il est nécessaire d'introduire une pondération de la fonction F citée ci-dessus. Il doit être possible de réaliser la pondération selon :

- les configurations de vol,
- les accéléromètres,
- les harmoniques.

La fonction F s'écrit alors :

$$F(\alpha) = \sum_c \lambda_c \sum_a \lambda_a \sum_h \gamma_h \left\| R_{c,a,h}(\alpha) + \gamma_{c,a,h} \right\|^2$$

où $R_{c,a,h}(\alpha)$ est la cellule de sortie correspondant à l'harmonique h de l'accéléromètre $\underline{a}$ de la configuration $\underline{c}$.

Par ailleurs, pour régler le rotor de queue 10 d'un hélicoptère 1, on réalise à ladite étape I/a) ladite première série de mesures, et à ladite étape II/a) ladite deuxième série de mesures, avec l'hélicoptère 1 au sol et le rotor de queue 10 en fonctionnement.

Dans ce cas, la mise en oeuvre de l'étape II/b) précitée du procédé conforme à l'invention comprend les opérations suivantes :

A2/ Traitement des fichiers

La position de référence du rotor étant différente sur chaque hélicoptère 1, il est nécessaire de recaler les mesures afin de conserver une origine identique. Soit $\alpha$ l'angle (pris positif dans le sens de rotation) entre la position de référence et la pale de référence, alors :

$$\varphi'_a = \varphi_a - \alpha$$

où $\varphi'$ et $\varphi$ sont respectivement la phase du niveau vibratoire avant et après recalage, a =1-2 représente l'accéléromètre. Les phases seront transformées de degrés en radians. Les données sont ensuite transformées d'une écriture trigonométrie en une écriture complexe (parties réelle et imaginaire).

B2 / Identification des défauts éventuels du rotor 10.

C2/ Calcul des valeurs de réglage

L'algorithme de réglage est identique à l'algorithme de réglage du rotor principal 6 (opération C1 précitée).

D2/ Pondération

Afin de réaliser un réglage optimal par rapport à l'utilisation et au comportement de l'hélicoptère 1, il est nécessaire d'introduire une pondération de la fonction F. Il doit être possible de pondérer suivant les accéléromètres.

La fonction F s'écrit alors :

$$F(\alpha) = \sum_{a} \lambda_a \|R_a(\alpha) + \gamma_a\|^2$$

où $R_a(\alpha)$ est la cellule de sortie correspondant à l'accéléromètre $\underline{a}$.

En plus de pouvoir être visualisées par le moyen 19, les valeurs de réglage des paramètres de réglage, déterminées par le calculateur 15, peuvent également être enregistrées dans une mémoire 30 qui est reliée par une liaison 31 audit calculateur 15, et être utilisées ultérieurement, par exemple pour faire des comparaisons.

Dans le cadre de la présente invention, on peut également réaliser ultérieurement une phase de recalage, pour laquelle :

a) on fait une troisième série de mesures, au cours de laquelle on fait varier uniquement les valeurs de réglage de certains desdits paramètres de réglage ; et

b) on ajuste ledit réseau de neurones à partir de ladite troisième série de mesures, pour les relations correspondantes qui sont relatives aux paramètres de réglage pour lesquels on a fait varier les valeurs de réglage.

Par conséquent, le procédé conforme à l'invention présente, de plus, les avantages suivants :

- les réglages à appliquer sont calculés en une seule étape ;
- ces réglages sont obtenus à partir d'un ou de deux vols, ce qui entraîne une immobilisation limitée de l'hélicoptère 1 ; et
- il est auto-adaptatif, c'est-à-dire qu'on peut adapter le réseau de neurones sans vols spécifiques supplémentaires (en utilisant les vols courants de mise au point de l'hélicoptère), de telle sorte que ledit réseau représente au mieux le comportement du nouvel hélicoptère.

**Revendications**

1. Procédé pour au moins détecter des défauts éventuels d'au moins un rotor (6, 10) d'un aéronef à voilure tournante (1) d'un type particulier d'aéronef à voilure tournante, un défaut correspondant à un état défectueux d'une pièce du rotor (6, 10),
   **caractérisé en ce que** :

   I - dans une étape préliminaire, dans laquelle on utilise un aéronef de référence correspondant à un aéronef à voilure tournante (1) dudit type particulier, dont le rotor (6, 10) est sans défaut et est réglé selon un réglage de référence, pour lequel le niveau vibratoire d'au moins une partie (3, 8) dudit aéronef (1) est minimal :

   a) on fait au moins une première série de mesures sur ledit aéronef de référence (1), en mesurant, lors d'un fonctionnement particulier dudit aéronef de référence, les valeurs d'au moins deux accélérations qui sont mesurées à des endroits quelconques de ladite partie (3, 8) de l'aéronef de référence et qui sont représentatives de vibrations engendrées au niveau de ladite partie (3, 8) de l'aéronef de référence :

   α) d'une part, avec le rotor (6, 10) de l'aéronef de référence (1) qui est sans défaut et qui est réglé selon ledit réglage de référence ; et
   β) d'autre part, en introduisant des défauts dans ledit rotor (6, 10) ; et

   b) à partir de cette première série de mesures d'accélérations et en considérant que l'aéronef (1) est un corps déformable, on détermine un réseau de neurones qui illustre les relations entre lesdites accélérations et au moins lesdits défauts ; et

   II - dans une étape ultérieure, pour au moins détecter les défauts éventuels du rotor (6, 10) d'un aéronef à voilure tournante particulier (1) dudit type d'aéronef :

   a) on fait une deuxième série de mesures sur ledit aéronef particulier (1), en mesurant les valeurs d'au moins certaines desdites accélérations au niveau de ladite partie (3, 8) de l'aéronef lors d'un fonctionnement particulier dudit aéronef ; et
   b) à partir de cette deuxième série de mesures d'accélérations et du réseau de neurones déterminé à l'étape I/b), on détecte les défauts éventuels dudit rotor (6, 10).

**2.** Procédé selon la revendication 1, pour de plus régler au moins un rotor (6, 10) d'un aéronef à voilure tournante (1) dudit type particulier d'aéronef à voilure tournante,
**caractérisé en ce que** :

I - dans l'étape préliminaire :

a) on fait ladite première série de mesures sur ledit aéronef de référence (1), en mesurant, lors du fonctionnement particulier dudit aéronef de référence, les valeurs desdites accélérations qui sont représentatives de vibrations engendrées au niveau de ladite partie (3, 8) de l'aéronef de référence, en plus desdites situations $\alpha$) et $\beta$), dans une situation $\gamma$) dans laquelle on fait varier les valeurs de réglage d'une pluralité de paramètres de réglage dudit rotor (6, 10) ; et
b) à partir de cette première série de mesures d'accélérations, on détermine ledit réseau de neurones qui illustre les relations entre, d'une part, lesdites accélérations et, d'autre part, lesdits défauts et lesdits paramètres de réglage ; et

II - dans l'étape ultérieure, qui est destinée de plus à régler le rotor (6, 10) de l'aéronef à voilure tournante particulier (1) dudit type d'aéronef, après lesdites opérations a) et b) :

c) à partir de cette deuxième série de mesures d'accélérations et du réseau de neurones déterminé à l'étape I/b), on détermine les valeurs de réglage d'au moins certains desdits paramètres de réglage, qui permettent de minimiser le niveau vibratoire de ladite partie (3, 8) de l'aéronef (1) ; et
d) on applique au rotor (6, 10) dudit aéronef (1) les valeurs de réglage ainsi déterminées pour lesdits paramètres de réglage.

**3.** Procédé selon la revendication 2,
**caractérisé en ce que**, entre les étapes II/b) et II/c), on élimine les défauts qui ont été détectés, le cas échéant, à l'étape II/b) et on réalise une nouvelle deuxième série de mesures qui sera utilisée dans l'étape II/c) pour déterminer les paramètres de réglage.

**4.** Procédé selon l'une des revendications 2 et 3,
**caractérisé en ce que** des éléments de réglage définissant lesdits paramètres de réglage comportent au moins les élément suivants (25, 27, 28) du rotor (6) de l'aéronef :

- au moins une masse d'équilibrage (25) de chacune des pales (7) du rotor (6) ;
- une bielle (27) sur chacune des pales (7) du rotor (6), à l'exception d'une pale qui représente une pale de référence ; et
- au moins un volet compensateur (28) sur le bord de fuite (29) de chacune des pales (7) du rotor (6).

**5.** Procédé selon l'une quelconque des revendications précédentes, **caractérisé en ce que**, pour un rotor d'avance et de sustentation (6) d'un aéronef à voilure tournante (1), on réalise, à ladite étape I/a), ladite première série de mesures au cours au moins des vols d'essai suivants :

- un vol de référence avec le rotor (6) réglé selon ledit réglage de référence ;
- des vols avec des défauts du rotor (6) ;
- un vol avec un déréglage particulier d'au moins une masse d'équilibrage (25) d'une pale (7) ;
- un vol avec un déréglage particulier d'au moins une bielle (27) d'une pale (7) ; et
- un vol avec un déréglage particulier d'au moins un volet compensateur (28) qui est prévu sur le bord de fuite (29) d'une pale (7).

**6.** Procédé selon la revendication 5,
**caractérisé en ce qu'**au moins l'un desdits vols d'essai réalisés à l'étape I/a) et desdits vols de mesure réalisés à l'étape II/a) comporte les configurations suivantes, au cours desquelles on réalise des mesures :

- une configuration de vol stationnaire ;
- une configuration de vol à environ 50 m/s ;
- une configuration de vol à la puissance maximale continue ; et
- un essai au sol avec le rotor (6) qui tourne.

**7.** Procédé selon l'une quelconque des revendications précédentes, **caractérisé en ce que**, pour un rotor d'avance et de sustentation (6) d'un aéronef à voilure tournante (1), ladite partie de l'aéronef au niveau de laquelle on mesure les valeurs desdites accélérations est la cabine (3) de l'aéronef (1).

**8.** Procédé selon l'une quelconque des revendications 1 à 4, **caractérisé en ce que**, pour un rotor de queue anticouple (10) d'un aéronef à voilure tournante (1), ladite partie de l'aéronef au niveau de laquelle on mesure les valeurs desdites accélérations est la poutre de queue (8) de l'aéronef (1).

**9.** Procédé selon l'une quelconque des revendications 1 à 4, **caractérisé en ce que**, pour un rotor de queue anticouple (10) d'un aéronef à voilure tournante (1), on réalise au moins l'une desdites première et deuxième séries de mesures, avec l'aéronef (1) au sol et le rotor de queue (10) en fonctionnement.

**10.** Procédé selon l'une quelconque des revendications 2 à 4, **caractérisé en ce qu'**à l'étape I/b), on tient compte des hypothèses supplémentaires suivantes pour déterminer ledit réseau de neurones :

- le rotor (6, 10) est non isotrope ;
- les relations entre, d'une part, les défauts et les paramètres de réglage et, d'autre part, les valeurs des accélérations, sont non linéaires ; et
- le niveau vibratoire existant en un point particulier de l'aéronef (1) correspond à la somme des vibrations élémentaires engendrées audit point particulier et provoquées par les défauts et le dérèglement desdits paramètres de réglage.

**11.** Procédé selon l'une quelconque des revendications précédentes, **caractérisé en ce qu'**à l'étape II/b), on visualise les défauts que l'on a détectés.

**12.** Procédé selon l'une quelconque des revendications précédentes, **caractérisé en ce qu'**à l'étape II/b), on enregistre les défauts que l'on a détectés.

**13.** Procédé selon l'une quelconque des revendications 2 à 4, **caractérisé en ce que** l'on détermine à l'étape II/c) la valeur de réglage α d'un paramètre de réglage, en minimisant l'expression suivante :

$$\left| \mathbf{R}(\alpha) + \gamma \right|^2$$

dans laquelle :

- R est la fonction de transfert correspondante dudit réseau de mesures ; et
- γ est un vecteur contenant le niveau vibratoire représentatif des mesures réalisées à l'étape II/a).

**14.** Procédé selon l'une quelconque des revendications 2 à 4, **caractérisé en ce qu'**à l'étape II/c), on visualise les valeurs de réglage que l'on a déterminées.

**15.** Procédé selon l'une quelconque des revendications 2 à 4, **caractérisé en ce qu'**à l'étape II/c), on enregistre les valeurs de réglage que l'on a déterminées.

**16.** Procédé selon l'une quelconque des revendications 2 à 4, **caractérisé en ce que** l'on réalise une phase de recalage, pour laquelle :

a) on fait une troisième série de mesures, au cours de laquelle on fait varier uniquement les valeurs de réglage de certains desdits paramètres de réglage ; et
b) on ajuste ledit réseau de neurones à partir de ladite troisième série de mesures, pour les relations correspondantes qui sont relatives aux paramètres de réglage pour lesquels on a fait varier les valeurs de réglage.

**17.** Dispositif pour détecter des défauts et déterminer des valeurs de réglage de paramètres de réglage d'un rotor (6, 10) d'un aéronef à voilure tournante (1), lesdites valeurs de réglages permettant de minimiser le niveau vibratoire d'au moins une partie de l'aéronef, **caractérisé en ce qu'**il comporte :

- au moins deux accéléromètres (21, 22, 23, 24) adaptés pour mesurer les valeurs d'au moins deux accélérations en des endroits quelconques de ladite partie de l'aéronef, cesdites valeurs étant représentatives des vibrations engendrées au niveau de ladite partie ;

- un calculateur (15) qui est susceptible de déterminer automatiquement lesdits défauts et lesdites valeurs de réglage, à partir d'un réseau de neurones et de valeurs de mesure d'une deuxième série de mesures obtenues à partir des au moins deux accéléromètres, ledit réseau de neurones illustrant les relations entre lesdites accélérations, lesdits défauts et lesdites valeurs de réglages, ledit réseau de neurones ayant été établi sur un aéronef de référence à voilure tournante du même type en utilisant une première série de mesures d'accélérations ;

- un moyen d'interface (17) entre ledit dispositif (16) et un opérateur, qui permet à ce dernier d'entrer lesdites valeurs de mesure de ladite deuxième série de mesures dans ledit calculateur (15) ; et

- un moyen d'indication (19) pour indiquer audit opérateur les défauts et les valeurs de réglage déterminées par ledit calculateur (15).

**18.** Dispositif selon la revendication 17,
**caractérisé en ce que** ledit calculateur (15) est susceptible de déterminer ledit réseau de neurones à partir de valeurs de mesure d'une première série de mesures, et **en ce que** ledit moyen d'interface (17) permet de plus, audit opérateur, d'entrer dans ledit calculateur (15) lesdites valeurs de mesure de ladite première série de mesures.

**19.** Dispositif selon l'une des revendications 17 et 18,
**caractérisé en ce qu'**il comporte de plus une mémoire (30) pour enregistrer ledit réseau de neurones.

**Claims**

**1.** Method for at least detecting any defects of at least one rotor (6, 10) of a rotary wing aircraft (1) of a particular type of rotary wing aircraft, a defect corresponding to a defective state of a part of the rotor (6, 10),
**characterized in that**:

I - in a preliminary step, in which a reference aircraft is used corresponding to a rotary wing aircraft (1) of said particular type, the rotor (6, 10) of which is without defect and is adjusted in accordance with a reference setting for which the vibration level of at least one portion (3, 8) of said aircraft (1) is at a minimum:

a) at least a first series of measurements are taken on said reference aircraft (1), by measuring, during a particular operation of said reference aircraft, the values of at least two accelerations which are measured at arbitrary locations of said portion (3, 8) of the reference aircraft and which are representative of vibrations generated at said portion (3, 8) of the reference aircraft:

α) firstly using the rotor (6, 10) of the reference aircraft (1) which is without defect and which is adjusted in accordance with said reference setting; and
β) secondly by introducing defects into said rotor (6, 10); and

b) on the basis of said first series of acceleration measurements and assuming that the aircraft (1) is a deformable body, a neural network which illustrates the relationships between said accelerations and at least said defects is determined; and

II - in a subsequent step, for at least detecting any defects of the rotor (6, 10) of a particular rotary wing aircraft (1) of said aircraft type:

a) a second series of measurements are taken on said particular aircraft (1) by measuring the values of at least some of said accelerations at said portion (3, 8) of the aircraft during a particular operation of said aircraft; and
b) on the basis of said second series of acceleration measurements and of the neural network determined in step I/b), any defects of said rotor (6, 10) are detected.

**2.** Method according to Claim 1, for additionally adjusting at least one rotor (6, 10) of a rotary wing aircraft (1) of said particular type of rotary wing aircraft, **characterized in that**:

I - in the preliminary step:

a) said first series of measurements are taken on said reference aircraft (1) by measuring, during the particular operation of said reference aircraft, the values of said accelerations which are representative of vibrations generated at said portion (3, 8) of the reference aircraft, in addition to said situations α) and β), in a situation γ) in which the adjustment values of a plurality of adjustment parameters of said rotor (6, 10) are varied; and

b) on the basis of said first series of acceleration measurements, said neural network which illustrates the relationships between firstly said accelerations and secondly said defects and said adjustment parameters is determined; and

II - in the subsequent step, which is intended additionally for adjusting the rotor (6, 10) of the particular rotary wing aircraft (1) of said aircraft type, after said operations a) and b):

c) on the basis of said second series of acceleration measurements and of the neural network determined in step I/b), the adjustment values of at least some of said adjustment parameters which enable the vibration level of said portion (3, 8) of the aircraft (1) to be minimized are determined; and

d) the adjustment values determined in this way for said adjustment parameters are applied to the rotor (6, 10) of said aircraft (1).

3. Method according to Claim 2,
**characterized in that**, between steps II/b) and II/c), any defects that have been detected in step II/b) are eliminated, and a new, second series of measurements are taken which will be used in step II/c) for determining the adjustment parameters.

4. Method according to one of Claims 2 and 3,
**characterized in that** the adjustment elements defining said adjustment parameters comprise at least the following elements (25, 27, 28) of the rotor (6) of the aircraft:

- at least one balance weight (25) for each of the blades (7) of the rotor (6);
- a link (27) on each of the blades (7) of the rotor (6), except for one blade which represents a reference blade; and
- at least one compensating tab (28) on the trailing edge (29) of each of the blades (7) of the rotor (6).

5. Method according to any one of the preceding claims, **characterized in that**, for an advance and lift rotor (6) of a rotary wing aircraft (1), in said step I/a), said first series of measurements are taken during at least the following test flights:

- a reference flight with the rotor (6) adjusted in accordance with said reference setting;
- flights with defects of the rotor (6);
- a flight with a particular misadjustment of at least one balance weight (25) of a blade (7);
- a flight with a particular misadjustment of at least one link (27) of a blade (7); and
- a flight with a particular misadjustment of at least one compensating tab (28) provided on the trailing edge (29) of a blade (7).

6. Method according to Claim 5,
**characterized in that** at least one of said test flights performed in step I/a) and of said measurement flights performed in step II/a) includes the following configurations, during which measurements are taken:

- a stationary flight configuration;
- a configuration of flight at about 50 m/s;
- a configuration of flight at continuous maximum power; and
- a test on the ground with the rotor (6) revolving.

7. Method according to any one of the preceding claims, **characterized in that**, for an advance and lift rotor (6) of a rotary wing aircraft (1), said portion of the aircraft at which the values of said accelerations are measured is the cabin (3) of the aircraft (1).

8. Method according to any one Claims 1 to 4, **characterized in that**, for an anti-torque tail rotor (10) of a rotary wing aircraft (1), said portion of the aircraft at which the values of said accelerations are measured is the tail boom (8) of the aircraft (1).

9. Method according to any one of Claims 1 to 4, **characterized in that**, for an anti-torque tail rotor (10) of a rotary wing aircraft (1), at least one of said first and second series of measurements is taken with the aircraft (1) on the ground and the tail rotor (10) in operation.

10. Method according to any one of Claims 2 to 4, **characterized in that** in step I/b), account is taken of the following additional assumptions for determining said neural network:

  - the rotor (6, 10) is not isotropic;
  - the relationships between firstly the defects and the adjustment parameters and secondly the acceleration values are non-linear; and
  - the vibration level existing at a particular point of the aircraft (1) corresponds to the sum of the elementary vibrations generated at said particular point and caused by the defects and the misadjustment of said adjustment parameters.

11. Method according to any one of the preceding claims, **characterized in that** in step II/b), the defects that are detected are displayed.

12. Method according to any one of the preceding claims, **characterized in that** in step II/b), the defects that are detected are recorded.

13. Method according to any one of Claims 2 to 4, **characterized in that** in step II/c), the adjustment value $\alpha$ of an adjustment parameter is determined by minimizing the following expression:

$$| R (\alpha) + \gamma |^2$$

in which:

  - R is the corresponding transfer function of said measurement network; and
  - $\gamma$ is a vector containing the vibration level representative of the measurements taken in step II/a).

14. Method according to any one of Claims 2 to 4, **characterized in that** in step II/c), the adjustment values that have been determined are displayed.

15. Method according to any one of Claims 2 to 4, **characterized in that** in step II/c), the adjustment values that have been determined are recorded.

16. Method according to any one of Claims 2 to 4, **characterized in that** a resetting stage is performed, for which:

  a) a third series of measurements are taken, during which only the adjustment values of some of said adjustment parameters are varied; and
  b) said neural network is adjusted on the basis of said third series of measurements, for the corresponding relationships which relate to the adjustment parameters for which the adjustment values have been varied.

17. Device for detecting defects and determining adjustment values for adjustment parameters of a rotor (6, 10) of a rotary wing aircraft (1), said adjustment values enabling the vibration level of at least one portion of the aircraft to be minimized,
**characterized in that** it comprises:

  - at least two accelerometers (21, 22, 23, 24) adapted to measure the values of at least two accelerations at arbitrary locations of said portion of the aircraft, said values being representative of the vibrations generated at said portion:
  - a computer (15) suitable for automatically determining said defects and said adjustment values on the basis of a neural network and of measurement values of a second series of measurements obtained from the at least two accelerometers, said neural network illustrating the relationships between said accelerations, said defects and said adjustment values, said neural networks having been established on a reference rotary wing aircraft of the same type using a first series of acceleration measurements;
- an interface means (17) between said device (16) and an operator, enabling the operator to input said measurement values of said second series of measurements into said computer (15); and
- an indicating means (19) for informing said operator of the defects and the adjustment values determined by said computer (15).

**18.** Device according to Claim 17,
**characterized in that** said computer (15) is suitable for determining said neural network on the basis of measurement values of a first series of measurements, and **in that** said interface means (17) further enables said operator to input into said computer (15) said measurement values of said first series of measurements.

**19.** Device according to one of Claims 17 and 18,
**characterized in that** it further includes a memory (30) for storing said neural network.


**Patentansprüche**

**1.** Verfahren, mindestens zum Feststellen eventueller Fehler mindestens eines Rotors (6, 10) eines Luftfahrzeugs mit drehenden Flügeln (1) eines besonderen Typs von Luftfahrzeugen mit drehenden Flügeln, wobei ein Fehler einem Defektzustand eines Teils des Rotors (6, 10) entspricht,
**dadurch gekennzeichnet, dass**:

I. - in einem ersten vorläufigen Schritt, bei dem ein Referenzluftfahrzeug verwendet wird, welches einem Luftfahrzeug mit drehendem Flügeln (1) des bestimmten Typs entspricht, dessen Rotor (6, 10) fehlerfrei ist und der nach einer Referenzregelung geregelt wird, bei der der Vibrationswert mindestens eines Teils (3, 8) des Luftfahrzeugs (1) minimal ist:

a) mindestens eine erste Messreihe an dem Referenzluftfahrzeug (1) ausgeführt wird, indem während eines besonderen Betriebszustands des Referenzluftfahrzeugs die Werte von mindestens zwei Beschleunigungen gemessen werden, die an beliebigen Orten des besagten Bereichs (3, 8) des Referenzluftfahrzeugs aufgenommen werden und die repräsentativ sind für in diesem Bereich (3, 8) erzeugte Vibrationen des Referenzluftfahrzeugs:

α) einerseits bei dem Rotor (6, 8) des Referenzluftfahrzeugs (1), welcher fehlerfrei ist und nach dem Referenzregelverfahren geregelt wird, und
β) andererseits, indem Fehler in den Rotor (6, 10) eingeführt werden, und

b) ausgehend von dieser ersten Beschleunigungsmessreihe und unter Berücksichtigung, dass das Luftfahrzeug (1) ein deformierbarer Körper ist, ein Netz von Neuronen bestimmt wird, das die Beziehung zwischen den Beschleunigungen und mindestens den Fehlern darstellt, und

II. - in einem späteren Schritt zur Erfassung der eventuellen Fehler des Rotors (6, 10) eines besonderen Typs eines Luftfahrzeugs mit drehenden Flügeln (1):

a) eine zweite Messreihe an dem besonderen Luftfahrzeug (1) ausgeführt wird, indem die Werte mindestens bestimmter Beschleunigungen in dem besagten Bereich (3, 8) des Luftfahrzeugs während eines bestimmten Betriebszustands des Luftfahrzeugs gemessen werden, und
b) ausgehend von dieser zweiten Beschleunigungsmessreihe und dem Neuronennetz, welches in dem Schritt I/b) bestimmt wurde, die eventuellen Fehler des Rotors (6, 10) erfasst werden.

**2.** Verfahren nach Anspruch 1, zum zusätzlichen Regeln mindestens eines Rotors (6, 10) eines Luftfahrzeugs (1) mit drehenden Flügeln des bestimmten Typs von Luftfahrzeugen mit drehenden Flügeln,
**dadurch gekennzeichnet, dass**

I. in einem vorläufigen Schritt:

a) die besagte erste Messreihe an dem Referenzluftfahrzeug (1) ausgeführt wird, indem während des bestimmten Betriebszustands des Referenzluftfahrzeugs die Werte der besagten Beschleunigungen gemessen werden, die repräsentativ sind für in den besagten Bereichen (3, 8) des Referenzluftfahrzeugs erzeugte Vibrationen, und zwar zusätzlich zu den besagten Situationen α) und β) in einer Situation γ), in der die Regelwerte einer Mehrzahl von Regelparametern des Rotors (6, 10) variiert werden, und
b) ausgehend von dieser ersten Beschleunigungsmessreihe das besagte Neuronennetz bestimmt wird, welches die Beziehung zwischen einerseits den besagten Beschleunigungen und andererseits den besagten Defekten und den Regelparametern darstellt, und

II. in einem späteren Schritt, der dazu bestimmt ist, zusätzlich den Rotor des besonderen Typs von Luftfahrzeugen mit drehenden Flügeln (1) nach den Schritten a) und b) zu regeln:

c) ausgehend von dieser zweiten Beschleunigungsmessreihe und dem in Schritt I/b) bestimmten Neuronennetz die Werte der Regelung von mindestens bestimmten Regelparametern bestimmt werden, die es ermöglichen das Vibrationsniveau des besagten Bereichs (3, 8) des Luftfahrzeugs (1) zu minimieren, und
d) bei dem Rotor (6, 10) des Luftfahrzeugs (1) die so bestimmten Werte als Regelparameter angewendet werden.

3. Verfahren nach Anspruch 2,
**dadurch gekennzeichnet, dass** zwischen den Schritten II/b) und II/c) die gegebenenfalls in Schritt II/b) erfassten Fehler eliminiert werden und eine zweite Messreihe durchgeführt wird, die im Schritt II/c) verwendet wird um die Regelparameter zu bestimmen.

4. Verfahren nach einem der Ansprüche 2 oder 3,
**dadurch gekennzeichnet, dass** die Regelelemente, die die Regelparameter definieren, mindestens folgende Elemente (25, 27, 28) des Rotors (6) des Luftfahrzeugs aufweisen:

- mindestens eine Ausgleichsmasse (25) eines jeden der Blätter (7) des Rotors (6),
- eine Pleuelstange (27) auf jedem der Blätter (7) des Rotors (6), mit Ausnahme eines Blattes, welches ein Referenzblatt darstellt, und
- mindestens eine Augleichsklappe (28) an der Hinterkante (29) eines jeden Blattes (7) des Rotors (6).

5. Verfahren nach einem der vorstehenden Ansprüche,
**dadurch gekennzeichnet, dass** für einen Vortriebs- und Auftriebsrotor (6) eines Luftfahrzeugs mit drehenden Flügeln (1) in dem ersten Schritt I/a) die erste Messreihe während mindestens folgender Versuchsflüge durchgeführt wird:

- einem Referenzflug, bei dem der Rotor (6) nach der Referenzregelung geregelt wird,
- Flügen mit den Fehlern des Rotors (6),
- einem Flug, bei dem eine besondere Deregulierung mindestens einer Ausgleichsmasse (25) eines Blattes (7) vorgenommen wurde,
- einem Flug mit einer besonderen Deregulierung mindestens einer Pleuelstange (27) eines Blattes (7), und
- einem Flug mit einer besonderen Deregulierung mindestens einer Kompensationsklappe (28), die am hinteren Ende (29) eines Blattes (7) angeordnet ist.

6. Verfahren nach Anspruch 5,
**dadurch gekennzeichnet, dass** mindestens einer der besagten Versuchsflüge, die in Schritt I/a) durchgeführt werden und die Messflüge, die während des Schrittes II/a) durchgeführt werden, die folgenden Konfigurationen aufweisen, während derer die Messungen durchgeführt werden:

- eine Konfiguration eines stationären Fluges,
- eine Konfiguration eines Fluges bei ungefähr 50 m/s,
- eine Konfiguration eines Fluges mit maximaler fortdauernder Leistung, und
- einen Versuch am Boden mit laufendem Rotor (6).

7. Verfahren nach einem der vorstehenden Ansprüche,
**dadurch gekennzeichnet, dass** für einen Vortriebs- und Auftriebsrotor (6) eines Luftfahrzeugs mit drehenden Flügeln der Bereich des Luftfahrzeugs, in dem die Werte der besagten Beschleunigung gemessen werden, die Kabine (3) des Luftfahrzeugs (1) ist.

8. Verfahren nach einem der Ansprüche 1 bis 4,
**dadurch gekennzeichnet, dass** für einen Antidrehmoment-Heckrotor (10) eines Luftfahrzeugs mit drehenden Flügeln (1) der Bereich des Luftfahrzeugs in dem die Werte der besagten Beschleunigungen gemessen werden der Heckträger (8) des Luftfahrzeugs (1) ist.

9. Verfahren nach einem der Ansprüche 1 bis 4,
**dadurch gekennzeichnet, dass** für einen Antidrehmoment Heckrotor (10) eines Luftfahrzeugs mit drehenden Flügeln (1) mindestens eine der besagten ersten und zweiten Messreichen mit dem Luftfahrzeug (1) am Boden und dem Heckrotor (10) in Betrieb durchgeführt werden.

10. Verfahren nach einem der Ansprüche 2 bis 4,
**dadurch gekennzeichnet, dass** im Schritt I/b) folgende zusätzlichen Hypothesen berücksichtigt werden, um das besagte Neuronennetz zu bestimmen:

- der Rotor (6, 10) ist nicht isotrop,
- die Beziehung zwischen, einerseits, den Fehlern und den Regelparametern und, andererseits, den Beschleunigungswerten nicht linear ist, und
- das an einem bestimmten Punkt des Luftfahrzeugs (1) existierende Vibrationsniveau entspricht der Summe von Elementarvibrationen, die an dem bestimmten Punkt erzeugt werden und die durch die Fehler und die Dejustierung der Regelparameter hervorgerufen werden.

11. Verfahren nach einem der vorstehenden Ansprüche,
**dadurch gekennzeichnet, dass** im Schritt II/b) die Fehler, die erfasst wurden, visualisiert werden.

12. Verfahren nach einem der vorstehenden Ansprüche,
**dadurch gekennzeichnet, dass** im Schritt II/b) die erfassten Fehler aufgezeichnet werden.

13. Verfahren nach einem der Ansprüche 2 bis 4,
**dadurch gekennzeichnet, dass** in Schritt II/c) der Regelwert $\alpha$ eines Regelparameters bestimmt wird, indem folgender Ausdruck minimiert wird:

$$\left| R(\alpha) + \gamma \right|^2$$

in dem:

- R die entsprechende Transferfunktion des Messpunktenetzes ist, und
- $\gamma$ ein Vektor ist, der das repräsentative Vibrationsniveau der in Schritt II/a) durchgeführten Messungen ist.

14. Verfahren nach einem der Ansprüche 2 bis 4,
**dadurch gekennzeichnet, dass** in Schritt II/c) die Regelwerte, die man bestimmt hat, visualisiert werden.

15. Verfahren nach einem der Ansprüche 2 bis 4,
**dadurch gekennzeichnet, dass** in Schritt II/c) die erfassten Regelwerte registriert werden.

16. Verfahren nach einem der Ansprüche 2 bis 4,
**dadurch gekennzeichnet, dass** eine Einstellungsphase durchgeführt wird, für die:

a) eine dritte Messreihe durchgeführt wird, während der nur die Regelwerte bestimmter Regelparameter verändert werden, und
b) das Neuronennetz ausgehend von dieser dritten Messreihe angepasst wird für die entsprechenden Beziehungen, die mit den Regelparametern in Verbindung stehen, für die die Werte der Regelparameter variiert werden.

17. Vorrichtung zum Erfassen von Fehlern und zum Bestimmen von Werten von Regelparametern eines Rotors (6, 10) eines Luftfahrzeugs mit drehenden Flügeln (1), wobei die Regelungswerte es ermöglichen, das Vibrationsniveau mindestens in einem Bereich des Luftfahrzeugs zu minimieren, **gekennzeichnet durch**:

- mindestens zwei Beschleunigungsmesser (21, 22, 23, 24) zum Messen der Werte von mindestens zwei Beschleunigungen an beliebigen Orten des besagten Bereichs des Luftfahrzeugs, wobei diese Werte repräsentativ sind für in diesem Bereich erzeugte Vibrationen,
- einen Rechner (15), der automatisch die Fehler und die Regelparameterwerte bestimmen kann, ausgehend von einem Neuronennetz und Messwerten einer zweiten Messreihe erhalten von den mindestens zwei Beschleunigungsmessern, wobei das Neuronennetz die Beziehung zwischen den Beschleunigungen, den besagten Fehlern und den Regelparameterwerten darstellt, wobei das Neuronennetz an einem Referenzluftfahrzeug mit drehenden Flügeln des gleichen Typs erstellt wurde, indem eine erste Messreihe von Beschleunigungen durchgeführt wurde,
- ein Endgerät (17), das es einer Bedienungsperson ermöglicht, die Messwerte der zweiten Messreihe in den Rechner (15) einzugeben, und
- ein Anzeigegerät (19), welches der Bedienungsperson die Fehler und die Werte der Regelparameter anzeigt, die vom Rechner (15) berechnet wurden.

18. Vorrichtung nach Anspruch 17,
**dadurch gekennzeichnet, dass** der Rechner (15) geeignet ist, das Neuronennetz, ausgehend von Messwerten einer ersten Messreihe, zu bestimmen und **dadurch**, dass das Endgerät (17) es der Bedienungsperson zusätzlich ermöglicht, diese Messwerte der ersten Messreihe in den Rechner (15) einzugeben.

19. Vorrichtung nach einem der Ansprüche 17 oder 18,
**dadurch gekennzeichnet, dass** sie ferner einen Speicher (30) zum Abspeichern des Neuronennetzes aufweist.

Fig. 1

EP 1 485 685 B1

Fig. 2

Fig. 3

**EP 1 485 685 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0377666 A
- US 4937758 A

### Littérature non-brevet citée dans la description

- **D. Rumlhart ; G. Hinton ; R. Williams.** Learning representation by back propagation errors. *Nature,* 1996, vol. 323, 533-536